# EUROPÄISCHE PATENTANMELDUNG

(11) **EP 2 476 561 A1**
(43) Veröffentlichungstag der Anmeldung: **18.07.2012**
(21) Anmeldenummer: 12151449.1
(22) Anmeldetag: 17.01.2012
(51) Int. Cl.: B44C 5/04, B60R 13/02

(54) **Dekorative Innenwandverkleidung**

(30) Priorität: 17.01.2011 CH 772011
(71) Anmelder: Quadrant Plastic Composites AG, 5600 Lenzburg (CH)
(72) Erfinder: Schimanski, Tilo, 6430 Schwyz (CH); Lefèvre, Jérôme, 8603 Schwerzenbach (CH)
(74) Vertreter: Schmauder & Partner AG Patent- & Markenanwälte VSP

(57) **Zusammenfassung**

Die Erfindung betrifft eine dekorative Innenwandverkleidung aus mindestens einem ebenen oder leicht gebogenen plattenförmigen Verkleidungselement (1), das direkt mit der Wand verbunden werden kann, wobei das plattenförmige Verkleidungselement eine Dichte von weniger als 1.0 g/cm² aufweist, aus einer Polypropylenmatrix und Verstärkungsfasern besteht und mit einem Vlies, einem textilen Stoff oder einer Folie aus Polyethylenterephthalat (4a) verbunden ist, die im Sublimationsdruckverfahren mit Farbpigmenten bedruckt sind. Außerdem betrifft die Erfindung ein Verfahren zur Herstellung einer solchen Innenwandverkleidung.

## Beschreibung

Die Erfindung betrifft eine dekorative Innenwandverkleidung, insbesondere von Wohnwagen und Wohnmobilen, sowie ein Verfahren zur Herstellung derartiger Innenwandverkleidungen.

Für die Innenverkleidung von Wohnwagen und Wohnmobilen, beispielsweise für Wandabdeckungen, Dachhimmel und Türverkleidungen wird gewöhnlich ein Holzwerkstoff als Träger verwendet, auf den eine Dekorfolie oder ein Dekorpapier oder eine Tapete mit Holzleim auflaminiert wird. Als Alternative zu Holzwerkstoffen werden neuerdings auch Platten aus faserverstärktem Polypropylen als Träger eingesetzt, die den Vorteil haben, dass sie relativ leicht sind und bei Feuchtigkeit nicht aufquellen und nicht verrotten. Das nachträgliche Auflaminieren von Dekormaterialien auf den Träger hat jedoch den Nachteil, dass sich aufgrund der auf ~1.22m (4 Fuss) begrenzten Breite der üblicherweise verwendeten Laminatoren unschöne Trennlinien in den Verkleidungselementen ergeben. Die einzelnen Zuschnitte müssen daher passgenau zusammengesetzt werden, und die entstehenden Trennlinien müssen zusätzlich kaschiert werden.

Dachhimmel für Automobile bestehen im Allgemeinen aus einem SchaumstoffTräger, z.B. aus Polyurethanschaum, auf den ein Dekorwerkstoff aufkaschiert wird. Bei anderen Anwendungen, beispielsweise Türverkleidungen, wird ein Dekorwerkstoff mit einer ggf. glasfaserverstärkten Thermoplastschmelze hinterpresst oder hinterspritzt. Auch für derartige Anwendungen sind leichte Platten aus faserverstärktem Polypropylen eine Alternative. Allen Verfahren ist gemeinsam nachteilig, dass das Dekor als separater Bestandteil in den Bauteil-Fertigungsprozess eingebracht werden muss.

Der Erfindung lag daher die Aufgabe zugrunde, leichte Innenwandverkleidungen mit dekorativer Oberfläche bereitzustellen, bei denen die genannten Nachteile nicht auftreten, sowie ein Verfahren zur Herstellung derartiger Innenwandverkleidungen zu entwickeln.

Diese Aufgaben werden erfindungsgemäss gelöst durch die Innenwandverkleidung nach Anspruch 1 bzw. durch ein Verfahren nach den Ansprüchen 3 oder 4.

Gegenstand der Erfindung ist dementsprechend eine Innenwandverkleidung aus mindestens einem ebenen oder leicht gebogenen plattenförmigen Verkleidungselement, das direkt mit der Wand verbunden ist, wobei das plattenförmige Verkleidungselement 2 bis 12 mm dick ist, 20 bis 80 Vol% Luftporen enthält, eine Dichte von weniger als 1.0 g/cm³ aufweist und aus einer Polypropylenmatrix und Verstärkungsfasern besteht, und wobei das plattenförmige Verkleidungselement verbunden ist mit einem Vlies, einem textilen Stoff oder einer Folie, die im Sublimationsdruckverfahren mit Farbpigmenten bedruckt sind.

Die WO 2006/122802 beschreibt ein Verfahren zur Herstellung von Fahrzeuginnenraumverkleidungen mit einer farblich bedruckten Oberfläche, bei dem ein Papier oder Film, der ein dekoratives Bild mit sublimierbaren Pigmenten trägt, auf ein Vlies aufgebracht wird, das mit einem offenporigen thermoplastischen Filz verbunden ist, wobei diese Anordnung in einer ersten Stufe zwischen Platten diskontinuierlich heiß verpresst wird, wobei das dekorative Bild auf das Vlies transferiert wird, ehe Papier oder Film vom Vlies wieder entfernt werden, und wobei in einer zweiten Stufe diese Anordnung in einem Kaltform-Werkzeug zu seiner endgültigen Form zu der Fahrzeuginnenverkleidung verpresst wird. Dieses Verfahren hat den Nachteil, dass die Innenverkleidung in einem aufwendigen Verfahrensschritt verpresst und umgeformt werden muss. Im Gegensatz dazu können die erfindungsgemäßen Verkleidungselemente direkt mit der Wand verbunden werden.

Ein weiterer Gegenstand der Erfindung ist ein Verfahren, bei dem ein gegebenenfalls vernadeltes Faservlies mit einer Dichte von weniger als 1.0 g/cm³ aus einem Polypropylenmaterial und Verstärkungsfasern bei Temperaturen zwischen 165 und 220°C zum Erweichen des Polypropylens und Verkleben der Verstärkungsfasern erhitzt und dann zusammen mit einer Funktionsschicht sowie gegebenenfalls einer Klebefolie bei einem Pressdruck von weniger als 3.0 bar kontinuierlich verpresst wird.

Bei einer ersten Ausführungsform ist die Funktionsschicht ein Vlies, ein textiler Stoff oder eine Folie aus Polyethylenterephthalat, welche im Sublimationsdruckverfahren mit Farbpigmenten bedruckt worden waren.

Bei einer alternativen Ausführungsform ist die Funktionsschicht ein unbedrucktes Vlies, ein unbedruckter textiler Stoff oder eine unbedruckte Folie aus Polyethylenterephthalat, und es wird zusätzlich ein mit Sublimations-Farbpigmenten beschichtetes Trägermaterial in die Presse zugeführt, welches nach dem Verpressen und Transfer der Farbpigmente von dem Trägermaterial auf das Vlies, den textilen Stoff oder die Folie wieder abgezogen wird.

Die Verstärkungsfasern sind vorzugsweise Glasfasern, insbesondere solche mit einer Länge von etwa 5 bis 120 mm. Daneben sind Carbon- und Aramidfasern, aber auch Naturfasern, zum Beispiel aus Flachs, Jute, Hanf, Kenaf, Sisal und Baumwolle geeignet.

Das Sublimationsdruckverfahren ist an sich bekannt. Beim Sublimationsdruck werden die Farbpigmente zunächst auf ein Trägermaterial, im Allgemeinen eine Folie oder Papier gedruckt. Anschließend werden die Farbpigmente bei einer Temperatur von 180 bis 210°C in der Gasphase vom Träger auf das eigentliche Dekormaterial transferiert. Das Dekormaterial ist meist Polyethylenterephthalat, welches den Vorteil hat, dass sich bei erhöhter Temperatur in der Oberfläche Poren bilden, in die die Farbpigmente einlagern können, wodurch ein abriebfester Druck erhalten wird. Bei der vorliegenden Erfindung wird als Dekormaterial ein Vlies, ein textiler Stoff oder eine Folie aus Polyethylenterephthalat, jeweils mit einem Flächengewicht von 40 bis 200 g/cm², vorzugsweise von 50 bis 150 g/cm² verwendet. Derartige bedruckte Dekormaterialien mit einer Vielzahl von Farbmotiven sind im Handel, beispielsweise von der Fa. Transfertex erhältlich. Geeignete Farbpigmente, die beim Erwärmen auf Temperaturen zwischen 180 und 210°C direkt in den gasförmigen Zustand übergehen, sind bekannt und erhältlich.

Die Herstellung des Faservlieses aus Verstärkungsfasern und Polypropylenmaterial geschieht nach bekannten Verfahren. Beispielsweise werden nach WO 2005/037897 oder WO 2006/105682 Verstärkungsfasern, vorzugsweise Glasfasern, mit Polypropylenfasern im Gewichtsverhältnis 80 : 20 bis 10 : 90 vermischt, das Mischvlies wird vernadelt und auf Temperaturen zwischen 180 und 220°C zum Erweichen bzw. Schmelzen des Polypropylens und Verkleben der Verstärkungsfasern erhitzt.

Bei einem anderen Verfahren werden nach EP-A 1 844 927 Verstärkungsfasern und Polypropylenpulver in wässriger Suspension vermischt, das Wasser wird abgepresst und die erhaltene Platte wird zu einem verfilzten Vlies getrocknet und anschließend bei 165 bis 220°C thermisch fixiert.

In beiden Fällen entsteht ein leichtes, 3 bis 25 mm dickes Faservlies mit einem Porengehalt von 20 bis 80 Vol.%, einer Dichte unterhalb von 1.0 g/cm³, vorzugsweise von 0.1 bis 0.8 g/cm³, und einem Flächengewicht von 500 bis 2'000 g/cm², insbesondere von 700 bis 1'500 g/cm². Das Faservlies wird vorzugsweise unmittelbar anschließend kontinuierlich, beispielsweise auf einer Doppelbandpresse mit einer oder mehreren Heizzonen und einer oder mehreren Kühlzonen, vorzugsweise 5 bis 60 sec lang bei einem Druck von weniger als 3.0 bar, insbesondere von 0.1 bis 1.0 bar, leicht verpresst, wobei die Dicke reduziert wird.

Ausführungsbeispiele der Erfindung werden nachfolgend anhand der Zeichnungen näher beschrieben, dabei zeigen:
- Fig. 1: eine Anordnung zur Herstellung von plattenförmigen, leichten Innenverkleidungen mit dekorativer Oberfläche, in einer Vertikalschnitt-Darstellung; und
- Fig. 2: eine weitere Anordnung zur Herstellung solcher Innenverkleidungen, ebenfalls in einer Vertikalschnitt-Darstellung.

Bei der ersten Ausführungsform der Erfindung wird beim kontinuierlichen Verpressen ein Vlies oder ein textiler Stoff oder eine Folie aus Polyethylenterephthalat, die im Sublimationsdruckverfahren mit Farbpigmenten bedruckt worden waren, zugeführt, vorzugsweise zusammen mit einer üblichen Mehrschichtklebefolie zur besseren Haftung auf dem Faservlies.

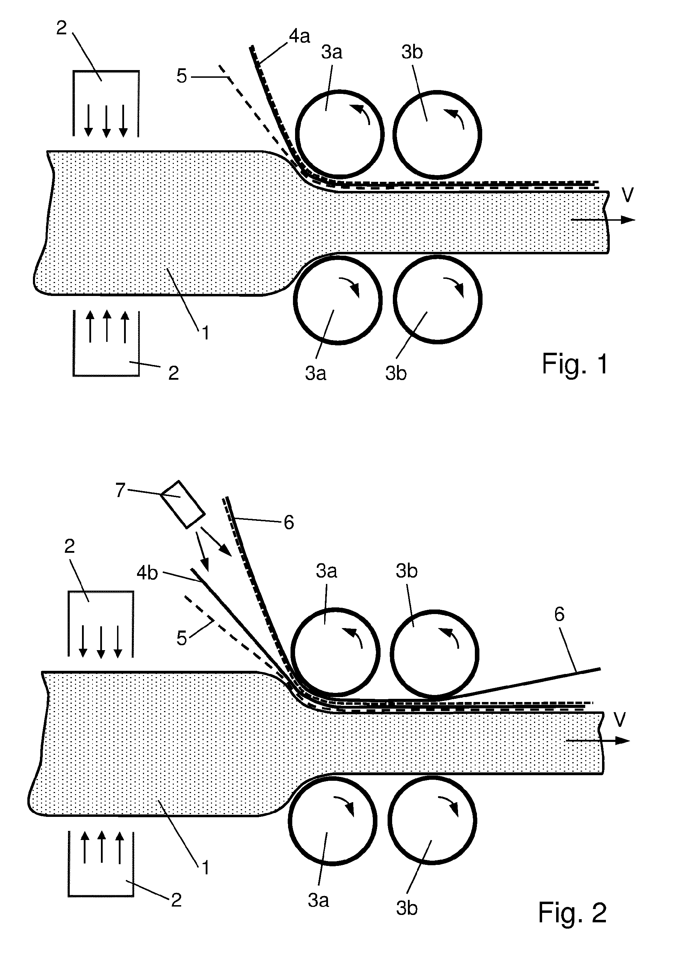

Fig. 1 zeigt das Prinzip dieser ersten Ausführungsform. Dabei bedeuten:
1: das Faservlies
2: der Ofen, in dem das Faservlies zum Erweichen des Polypropylens erhitzt wird
3: eine Presse mit einer Heizzone 3a und einer Kühlzone 3b
4: ein Polyethylenterephthalat-Vlies, das auf der dem Faservlies abgewandten Seite mit Farbpigmenten bedruckt ist, und
5: eine Klebefolie.

Bei der alternativen Ausführungsform wird beim kontinuierlichen Verpressen ein unbedrucktes Vlies, ein unbedruckter textiler Stoff oder eine unbedruckte Folie aus Polyethylenterephthalat zugeführt, vorzugsweise wieder zusammen mit einer Klebefolie. Zusätzlich wird auf der dem Faservlies abgewandten Seite ein Trägermaterial zugeführt, welches einseitig mit Sublimations-Farbpigmenten beschichtet ist. Das Trägermaterial kann - wie oben ausgeführt - Papier oder eine Folie sein. Bei dieser Ausführungsform ist die Heizzone der Presse vorzugsweise auf Temperaturen zwischen 180 und 210°C beheizt, damit die Farbpigmente auf das Vlies bzw. den textilen Stoff bzw. die Folie transferiert werden können. Zur Erhöhung des Wärmeeintrages kann zusätzlich zwischen Vlies und dem bedruckten Trägermaterial ein Heizstrahler positioniert werden. Bei dieser Ausführungsform sind längere Verweilzeiten in der Heizzone der Presse, vorzugsweise von 20 bis 60 sec, erforderlich. Auf dem Vlies, dem Stoff bzw. der Folie sind die Farbpigmente dann auf der dem Faservlies abgewandten Seite fixiert. Anschlie-βend wird das Trägermaterial wieder abgezogen.

Fig. 2 zeigt das Prinzip dieser alternativen Ausführungsform. Dabei bedeuten:
1: das Faservlies
2: der Ofen, in dem das Faservlies zum Erweichen des Polypropylens erhitzt wird
3: eine Presse mit Heizzone 3a und Kühlzone 3b
4: ein unbedrucktes Polyethylenterephthalat-Vlies
5: eine Klebefolie
6: ein Trägermaterial, das auf der dem Faservlies zugewandten Seite mit Farbpigmenten beschichtet ist
7: ein Heizstrahler.

Bei beiden Ausführungsformen können zusätzlich noch UV-stabilisierte Folien, z.B. transparente Verbundfolien aus Polypropylen und Polyamid als Aussenschichten mitverpresst werden.

Bei beiden Verfahren erhält man kontinuierliche Bahnen. Diese können entweder direkt zu Platten geschnitten werden, oder man kann sie aufrollen und erst bei Bedarf zu Platten der gewünschten Länge schneiden.

Die dabei erhaltenen leichten, ebenen Platten sind mit einem Vlies, einem textilen Stoff oder einer Folie verbunden, die mit Farbpigmenten bedruckt sind.

Diese Platten, die eine dekorative Oberfläche aufweisen, können nun direkt an Innenwände angebracht werden, beispielsweise durch Verkleben, Nageln, Schrauben oder Klipsen. Sie können auch in einem gemeinsamen Rahmen mit einem Wandelement gehalten werden.

Die erfindungsgemäße Innenverkleidung wird bevorzugt an den Innenwänden von Wohnwagen oder Wohnmobilen angebracht, sie ist jedoch auch für die Verkleidung von Hausinnenwänden, zum Beispiel Bürowänden, sowie für Wohncontainer oder Schrankwänden geeignet.

Es ist von Vorteil, dass die ebenen oder leicht gebogenen plattenförmigen Verkleidungselemente direkt, ohne weitere Pressverformung auf die Wände aufgebracht werden können. Dabei kann es in einigen Fällen notwendig sein, die etwas flexiblen, langen Platten von Hand leicht zu verbiegen, um sie an unebene Wände anzupassen. Beispielsweise lässt sich mit einer 2 mm dicken Platte ein Biegungsradius bis hinunter auf etwa 100 mm realisieren. Dies ermöglicht es auch, das Verkleidungselement nach der Herstellung aufzurollen. Der Benutzer, beispielsweise ein Wohnwagenbauer, kann in der Folge das Verkleidungselement von der Rolle abziehen und auf Mass abschneiden. Somit können beispielsweise Wohnwagenwände in einem Stück, also ohne Trennlinien, hergestellt werden.

## Patentansprüche

1. Dekorative Innenwandverkleidung aus mindestens einem ebenen oder leicht gebogenen plattenförmigen Verkleidungselement, das direkt mit der Innenwand verbunden ist, wobei das plattenförmige Verkleidungselement 2 bis 12 mm dick ist, 20 bis 80 Vol.% Luftporen enthält, eine Dichte von weniger als 1.0 g/cm³ aufweist und aus einer Polypropylenmatrix und Verstärkungsfasern besteht, **dadurch gekennzeichnet, dass** das plattenförmige Verkleidungselement verbunden ist mit einem Vlies, einem textilen Stoff oder einer Folie aus Polyethylenterephthalat, die im Sublimationsdruckverfahren mit Farbpigmenten bedruckt sind.

2. Dekorative Innenwandverkleidung nach Anspruch 1, **dadurch gekennzeichnet, dass** damit die Innenwände von Wohnwagen und Wohnmobile versehen sind.

3. Verfahren zur Herstellung der Innenwandverkleidung nach Anspruch 1, **dadurch gekennzeichnet, dass** man ein gegebenenfalls vernadeltes Faservlies (1) mit einer Dichte von weniger als 1.0 g/cm³ aus einem Polypropylenmaterial und Verstärkungsfasern bei Temperaturen zwischen 165 und 220°C zum Erweichen des Polypropylens und Verkleben der Glasfasern erhitzt und dann zusammen mit einem Vlies (4a), einem textilen Stoff oder einer Folie aus Polyethylenterephthalat, die jeweils im Sublimationsdruckverfahren mit Farbpigmenten beschichtet worden waren, sowie gegebenenfalls zusammen mit einer Klebefolie (5) bei einem Pressdruck von weniger als 3.0 bar kontinuierlich verpresst.

4. Verfahren zur Herstellung der Innenwandverkleidung nach Anspruch 1, **dadurch gekennzeichnet, dass** man ein gegebenenfalls vernadeltes Faservlies (1) mit einer Dichte von weniger als 1.0 g/cm³ aus einem Polypropylenmaterial und Verstärkungsfasern bei Temperaturen zwischen 165 und 220°C zum Erweichen des Polypropylens und Verkleben der Verstärkungsfasern erhitzt und dann zusammen mit einem unbedruckten Vlies (4b), einem unbedrucktem textilen Stoff oder einer unbedruckten Folie aus Polyethylenterephthalat, sowie gegebenenfalls zusammen mit einer Klebefolie (5) und zusätzlich zusammen mit einem mit Sublimations-Farbpigmenten beschichteten Trägermaterial (6) bei einem Pressdruck von weniger als 3.0 bar und einer Temperatur zwischen 180 und 210°C kontinuierlich verpresst, und dass das Trägermaterial nach dem Verpressen und Transfer der Farbpigmente von dem Trägermaterial auf das Vlies, den textilen Stoff oder die Folie wieder abgezogen wird.

5. Verfahren nach einem der Ansprüche 3 oder 4, **dadurch gekennzeichnet, dass** das Faservlies ein vernadeltes Mischfaservlies aus Verstärkungsfasern und Polypropylenfasern mit einem Flächengewicht von 500 bis 2'000 g/cm³ ist.

6. Verfahren nach einem der Ansprüche 3 oder 4, **dadurch gekennzeichnet, dass** das Faservlies (1) ein nach dem Papierverfahren hergestellter Filz aus Verstärkungsfasern und Polypropylenpulver mit einem Flächengewicht von 500 bis 2'000 g/cm³ ist.

7. Verfahren nach einem der Ansprüche 3 oder 4, **dadurch gekennzeichnet, dass** das Vlies (4; 4b), der textile Stoff oder die Folie ein Flächengewicht von 40 bis 200 g/cm³ aufweisen.

8. Verfahren nach einem der Ansprüche 3 oder 4, **dadurch gekennzeichnet, dass** das plattenförmige Verkleidungselement zugeschnitten und dann direkt an die Innenwand angeklebt, angenagelt, angeschraubt, angeklipst oder in einem gemeinsamen Rahmen mit einem Wandelement gehalten wird.
